# EUROPEAN PATENT APPLICATION

(11) **EP 3 869 810 A1**
(43) Date of publication of application: **25.08.2021**
(21) Application number: 19874167.0
(22) Date of filing: 30.09.2019
(51) Int. Cl.: H04N 21/426, H04N 21/431, H04N 21/44

(54) **VIDEO-BASED INFORMATION ACQUISITION METHOD AND DEVICE**

(30) Priority: 18.10.2018 CN 201811215133
(71) Applicant: Baidu Online Network Technology (Beijing) Co., Ltd., Beijing 100085 (CN)
(72) Inventor: WANG, Qun, Beijing 100085 (CN); DONG, Weishan, Beijing 100085 (CN); MA, Chunyang, Beijing 100085 (CN)
(74) Representative: Studio Torta S.p.A.
(86) International application number: PCT/CN2019/109446
(87) International publication number: WO 2020/078215

(57) **Abstract**

The application provides a video-based information acquisition method and device. The method includes: detecting, by a terminal apparatus, a main body in a currently played video picture; intercepting an image of the main body from the video picture; acquiring relevant information of the main body according to the image of the main body; displaying the video picture and the relevant information of the main body on a same screen. The terminal apparatus can actively recommend relevant content of a main body in a video for a user, by actively detecting the main body in a video picture, triggering an acquisition of the relevant information of the main body and displaying the relevant information to the user, which does not require any operations by the user, thereby improving the user experience.

## Description

### CROSS-REFERENCE TO RELATED APPLICATION

The application claims priority to Chinese Patent Application No. 2018112151335, entitled "VIDEO-BASED INFORMATION ACQUISITION METHOD AND DEVICE" and filed on October 18, 2018, which are hereby incorporated by reference in its entirety.

### TECHNICAL FIELD

The present application relates to the field of video technology and, in particular, to a video-based information acquisition method and device.

### BACKGROUND

With the popularization of smart terminals such as smart phones, tablets, smart TVs and smart homes, watching videos through smart terminals has become an important means of entertainment or information acquisition in people's daily lives. Currently, during the process of playing a video through a smart terminal, users cannot interact based on the content in a video picture.

If a user is interested in a person, a substance or even a landscape and the like in a video during the process of video play, the user can only interrupt the currently played video and query through a search engine, etc., or use other apparatus to query, which is burdensome and time-consuming for the user to operate. In addition, a user may face a problem of not knowing how to query. For example, a user may be interested in a person in a video, but he does not know who the person is, and thus he cannot enter accurate keywords in a search engine to search.

### SUMMARY

The present application provides a video-based information acquisition method and device, which can actively recommend relevant content of the main body in a video to a user without triggering by the user, thereby improving user experience.

A first aspect of the application provides a video-based information acquisition method, including:
detecting, by a terminal apparatus, a main body in a currently played video picture;
intercepting, by the terminal apparatus, an image of the main body from the video picture;
acquiring, by the terminal apparatus, relevant information of the main body according to the image of the main body;
displaying, by the terminal apparatus, the video picture and the relevant information of the main body on a same screen.

The terminal apparatus can actively recommend relevant content of the main body in a video for a user, by actively detecting a main body in a video picture, triggering an acquisition of relevant information of the main body and displaying the relevant information to the user, which does not require any operation by the user, thereby improving the user experience.

In an exemplary manner, the acquiring, by the terminal apparatus, relevant information of a main body according to an image of the main body includes:
sending, by the terminal apparatus, the image of the main body to a server, so as to enable the server to recognize the main body according to the image of the main body;
receiving, by the terminal apparatus, the relevant information of the main body sent by the server.

In an exemplary manner, before the receiving, by the terminal apparatus, the relevant information of the main body sent by the server, the method further includes:
receiving, by the terminal apparatus, a recognition result of the main body sent by the server;
judging, by the terminal apparatus, whether the main body has been detected according to the recognition result;
if the main body has not been detected, sending, by the terminal apparatus, a data request to the server, where the data request to acquire the relevant information of the main body.

The terminal apparatus judges whether the main body has been detected according to the recognition result sent by the server, and ends the search recommendation process to avoid repeatedly recommending a relevant content of the same main body to the user, thereby improving the user experience and avoiding wasting resource due to repeatedly requesting to the server for the same content.

In another exemplary manner, the acquiring, by the terminal apparatus, the relevant information of the main body according to the image of the main body includes:
recognizing, by the terminal apparatus, the main body according to the image of the main body to obtain a recognition result;
judging, by the terminal apparatus, whether the main body has been detected according to the recognition result;
if the main body has not been detected, sending, by the terminal apparatus, a data request to the server, where the data request is configured to request the relevant information of the main body;
receiving, by the terminal apparatus, the relevant information of the main body sent by the server.

The terminal apparatus recognizes the main body, and judges whether the main body has been detected according to the recognition result, then ends the search recommendation process to avoid repeatedly recommending the relevant content of the same main body to the user, thereby improving user experience and avoiding wasting resources due to repeatedly requesting the same content to the server.

In an exemplary manner, the method further includes:
displaying, by the terminal apparatus, prompt information on a screen, where the prompt information is configured to prompt that relevant information on the screen is the relevant information of the main body.

In an exemplary manner, the displaying, by the terminal apparatus, the relevant information of the main body and the video picture on a same screen includes:
overlapped-displaying, by the terminal apparatus, a relevant content of the main body on a preset position of a video content, and a display window of the relevant content of the main body is less than half of a display window of the video.

By overlapped-displaying the relevant content of the main body on the video content, the relevant content of the main body and the video content can be well integrated together to bring a better experience to the user.

In another exemplary manner, the displaying, by the terminal apparatus, the relevant information of the main body and the video picture on a same screen includes:
displaying, by the terminal apparatus, a content of the main body in a preset area outside a display window of the video.

In an exemplary manner, the detecting, by the terminal apparatus, a main body in a played video picture by the terminal apparatus, including:
detecting, by the terminal apparatus, a contour of a detection object in the video picture;
determining, by the terminal apparatus, the main body according to the contour of the detection object in the video picture.

A second aspect of the present application provides a video-based information acquisition device, including:
a detection module, configured to detect a main body in a video picture currently displayed on a terminal apparatus;
an interception module, configured to intercept an image of the main body from the video picture;
an acquisition module, configured to acquire relevant information of the main body according to the image of the main body;
a display module, configured to display the relevant information of the main body and the video picture on a same screen.

In an exemplary manner, the acquisition module is specifically configured to:
send the image of the main body to a server, so as to enable the server to recognize the main body according to the image of the main body;
receive the relevant information of the main body sent by the server.

In an exemplary manner, before receiving, by the acquisition module, the relevant information of the main body sent by the server, the acquisition module is further configured to:
receive a recognition result of the main body sent by the server;
judge whether the main body has been detected according to the recognition result;
if the main body has not been detected, send a data request to the server, where the data request is configured to request the relevant information of the main body.

In another exemplary manner, the acquiring module is specifically configured to:
recognize the main body according to the image of the main body to obtain a recognition result;
judge whether the main body has been detected according to the recognition result;
if the main body has not been detected, send a data request to the server, where the data request is configured to request relevant information of the main body;
receive the relevant information of the main body sent by the server.

In an exemplary manner, the display module is further configured to: display prompt information on a screen, where the prompt information is configured to prompt that the relevant information on the screen is the relevant information of the main body.

In an exemplary manner, the display module is specifically configured to:
overlapped-display a relevant content of the main body on a preset position of a video content, and a display window of the relevant content of the main body is less than half of a display window of the video.

In another exemplary manner, the display module is specifically configured to:
display a content of the main body in a preset area outside a display window of the video.

In an exemplary manner, the detection module is specifically configured to:
detect a contour of a detection object in the video picture;
determine the main body according to the contour of the detection object in the video picture.

A third aspect of the present application provides a terminal apparatus, including a processor, a memory and a transceiver, where the memory is configured to store instructions, the transceiver is configured to communicate with other apparatuses, the processor is configured to execute the instructions stored in the memory, so as to cause the terminal apparatus to execute the method according to the first aspect of the present application.

A fourth aspect of the present application provides a computer-readable storage medium, where the computer-readable storage medium stores instructions which, when being executed, cause a computer to execute the method according to the first aspect of the present application.

According to the video-based information acquisition method and device provided by the present application, the terminal apparatus detects the main body in the currently played video picture, intercepts the image of the main body from the video picture, acquires the relevant information of the main body according to the image of the main body, and displays the video picture and the relevant information of the main body on the same screen. The terminal apparatus can actively recommend the relevant content of the main body in the video to the user, by actively detecting the main body in the video picture, triggering the acquisition of the relevant information of the main body, and displaying the relevant information to the user, which does not require any operation by the user, thereby improving the user experience.

### BRIEF DESCRIPTION OF DRAWINGS

FIG. 1 is a schematic diagram of a network architecture applicable to the present application;
FIG. 2 is a flowchart of a video-based information acquisition method provided in Embodiment I of the present application;
FIG. 3 is a schematic diagram of displaying a video and relevant information of a main body;
FIG. 4 is another schematic diagram of displaying a video and relevant information of a main body;
FIG. 5 is a signaling flowchart of a video-based information acquisition method provided in Embodiment II of the present application;
FIG. 6 is a schematic structural diagram of a video-based information acquisition device provided in Embodiment III of the present application;
FIG. 7 is a schematic structural diagram of a terminal apparatus provided in Embodiment IV of the present application.

### DESCRIPTION OF EMBODIMENTS

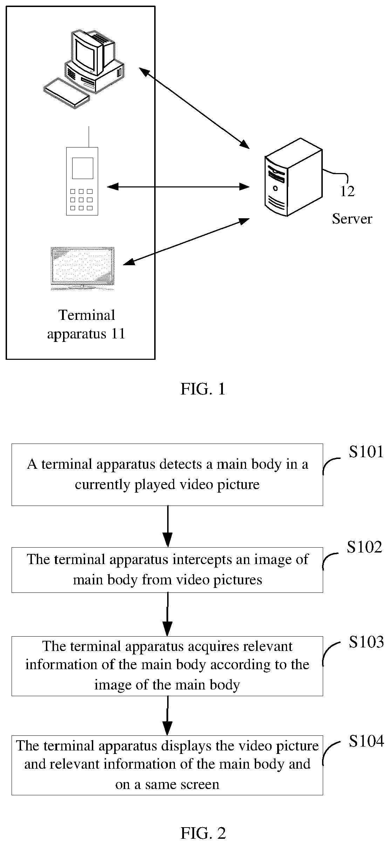

The present application provides a video-based information acquisition method. FIG. 1 is a schematic diagram of a network architecture applicable to the present application. As shown in FIG. 1, the network architecture includes at least one terminal apparatus 11 and at least one server 12. The terminal apparatus 11 can play a video, which can be played via an installed video player, or via a browser. The terminal apparatus 11 is also called as terminal, user equipment (UE), access terminal, user unit, mobile device, user terminal, wireless communication apparatus, user agent or user apparatus. The terminal apparatus can be a personal digital assistant (PDA) device, a smart TV, a handheld apparatus with wireless communication function (such as smart phone, a tablet), a computing device (such as personal computer, PC), vehicle apparatus and wearable apparatus, etc.

The server 12 can be used for image recognition. A large number of image features of persons, substances, landscapes or the like are pre-stored on the server 12. Subsequently, the image sent by terminal apparatus can be matched with the feature parameters of a large number of pre-stored images to recognize a person, a substance, a landscape and the like in the image. The server 12 can also be configured to generate relevant content of a main body of an image. The server 12 can store relevant content of persons, substances and landscapes or the like, and those can also be stored on other servers.

FIG. 2 is a flowchart of a video-based information acquisition method provided in Embodiment I of the present application. As shown in FIG. 2, the method in this embodiment includes the following steps:
Step S101: A terminal apparatus detects a main body in a currently played video picture.

The terminal apparatus can play a video via an installed video player or a browser, and the video can be a TV series, movie or other programs. The terminal apparatus can periodically detect the main body in the currently played video picture, for example, every 5 minutes.

Optionally, there are starting and closing buttons for a search recommendation function on a video play page. If a user starts the search recommendation function, the terminal apparatus will periodically detect the main body in the currently played video picture; if the user does not start the search recommendation function, the terminal apparatus will not detect the main body in the currently played video picture. During a process of video play, a user can also start or close the search recommendation function at any time according to their requirements. For example, when a user sees an unknown actor, the search recommendation function is started, and after acquiring relevant information of the actor, the search recommendation function is closed.

The main body in the video picture can be a person, such as a certain person in a TV series or a certain contestant in a competition; the main body can also be a substance, such as a vehicle, a household appliance, a building, etc.; moreover, the main body can be a landscape. Optionally, there can be a priority order among different detection objects. In case there are a person, an object and a landscape in a video picture, when detecting the main body in the video picture, the terminal apparatus may select detection objects with the highest priority as candidate objects, and determine the main body from the candidate objects. Under normal conditions, a person has the highest priority, followed by an object, and finally a landscape. When there are a person, an object and a landscape in the video picture, the terminal apparatus may select the person as a candidate object. There may be multiple persons in a video, and one or more of them need to be selected as the main body(s). Obviously, the main body in the video pictures can also be set as a person, so that the detection object can only be the person.

Exemplarily, the terminal apparatus detects a contour of the detection object in the video picture, and determines the main body according to the contour of the detection object in the video picture. A person in the video picture can be recognized firstly according to the contour of the detection object. When pluralities of persons are recognized, the contours of the detection objects are used for determining whose face is frontal, side and rear. If there is a person whose face is frontal, the person whose face is side or rear is eliminated; if there is only one person whose face is frontal, the person whose face are frontal is determined to be the main body of the video picture; if there are multiple persons whose faces are frontal, the multiple persons whose faces are frontal may be served as the main bodies, or the person located in the middle of the picture may be served as the main body, or the person with the largest contour area may also be served as the main body.

Step S102: the terminal apparatus intercepts an image of main body from video pictures.

The terminal apparatus may intercept one or more images of the main body. The terminal apparatus may take a screenshot of the entire video picture, and then crop the screenshot to obtain an image of the main body. When the main body is a person, the intercepted image of the main body must include the face of the person. The terminal apparatus may also only intercept an image of the main body, without taking a screenshot of the entire video picture.

Step S103: the terminal apparatus acquires relevant information of the main body according to the image of the main body.

In a manner, the terminal apparatus sends the image of the main body to the server, so that a server may recognize the main body according to the image of the main body, and the terminal apparatus receives the relevant information of the main body sent by the server.

In this manner, after receiving the image of the main body, the server acquires the feature parameters of the image of the main body, which can include any one or a combination of the following parameters: a color feature, a shape feature and a texture feature. The server can acquire the feature parameters of the image of the main body by at least one of horizontal and vertical projection, an edge detection result, shape analysis or color analysis.

The server matches the feature parameter of the image of the main body with feature parameters of a large number of template images stored locally or in a database. The main body in the template image is known. If the image of the main body matches the feature parameter of a certain image successfully, the main body can be recognized. For example, a large number of feature parameters of celebrity images are stored locally or in a database, and the main body can be recognized as a certain celebrity by matching. The server further queries relevant information of the main body and the relevant information can be a brief introduction of the main body (such as a content of Baidu Encyclopedia), or the latest news of the main body, or other relevant videos of the main body.

Optionally, after the server recognizes the main body, it sends a recognition result of the main body to the terminal apparatus. The recognition results of the main body may include the name of the main body, and may also include some simple descriptions of the main body. For example, when the main body is a person, the recognition result may include the name of the person, as well as gender, occupation and age.

The terminal apparatus receives a recognition result of the main body sent by the server, and judges whether the main body has been detected according to the recognition result. Each time the terminal apparatus recognizes a main body, it will save the recognition result of the new main body. Subsequently, when receiving a recognition result of the main body, the terminal apparatus may judge whether the recognition result of the main body is saved: if the recognition result of the main body is saved, it means that the main body has been detected; if the recognition result is not saved, it means that the main body has not been detected.

If the main body has not been detected, the terminal apparatus sends a data request to the server. The data request is configured to request relevant information of the main body and the data request may include keywords of the main body, such as name, gender and occupation of a person, name and attribute of a substance, etc. The server queries the relevant content of the main body according to the keywords of the main body and sends it to the terminal apparatus. If the main body has been detected, then the search recommendation process is ended.

In another manner, the terminal apparatus recognizes a main body to acquire a recognition result according to the image of main body, and judges whether the main body has been detected according to the recognition result. If the main body has not been detected, the terminal apparatus sends a data request to the server, where the data request is configured to request the relevant information of the main body. And the server sends the relevant information of the main body to the terminal apparatus. Different from the previous manner, in this manner, the main body is recognized by the terminal apparatus, and the recognition method adopted by the terminal apparatus can be the same as that of the server.

In this embodiment, the terminal apparatus judges whether the main body has been detected according to the recognition result to avoid repeatedly recommending the relevant content of the same main body to the user, thereby improving the user experience and avoiding waste of resources due to repeatedly requesting the same content from the server.

Step S104: the terminal apparatus displays the video picture and relevant information of the main body and on a same screen.

The terminal apparatus can display the video picture and the relevant content of the main body on a same screen according to the pre-designed template style. In one manner, the terminal apparatus overlapped-displays the relevant content of the main body on a preset position of the video content. The display window of the relevant content of the main body is less than half of the display window of the video.

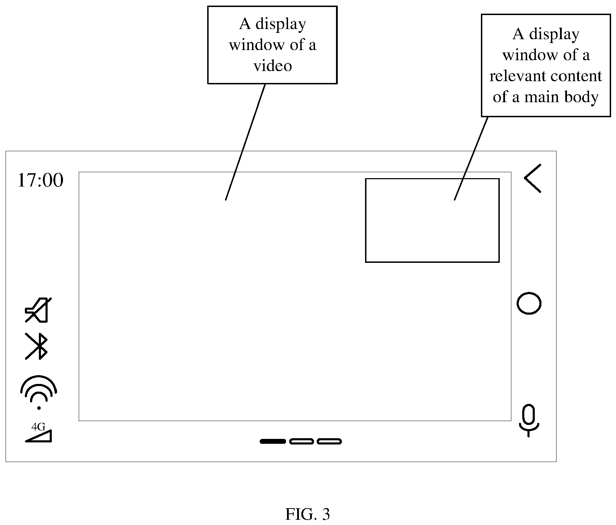

The preset position can be the upper right corner, the lower right corner, the upper left corner or the lower left corner of the display window of the video, so as to avoid the display window of the relevant content of the main body from covering the video and affecting the user to watch the video. Moreover, the display window of the relevant content of the main body should not be too large to avoid covering the video and disturbing the user to watch the video. FIG. 3 is a schematic diagram of displaying video and relevant information of a main body. As shown in FIG. 3, the display window of relevant information of the main body is located in the upper right corner of the display window of the video.

Optionally, a size of the display window of the relevant content of the main body can be adjusted, and the position of the display window can also be moved. The user can move the display window of the relevant content of the main body and adjust the size of the display window according to requirements. A shape of the display window of the relevant content of the main body can be a rectangle, a circle, a polygon. In order to increase interest, the shape can also be an animal contour, which is not limited by this embodiment. The display window of the relevant content of the main body can also be displayed semi-transparently.

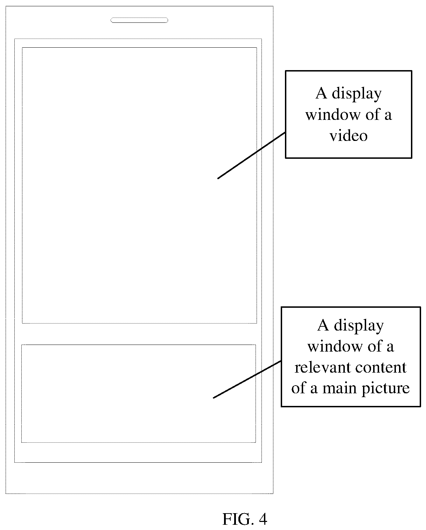

In another manner, the terminal apparatus displays the content of the main body in a preset area outside the display window of the video. FIG. 4 is another schematic diagram of displaying video and relevant information of main body. As shown in FIG. 4, the display window of relevant information of the main body is located below the display window of the video.

Optionally, the terminal apparatus displays prompt information on the screen, where the prompt information is configured to prompt that the relevant information on the screen is the relevant information of the main body. By associating the main body with the relevant information, it is avoided that the user does not know which person or substance the relevant information on the screen belongs to when there are multiple persons or substances on the screen. The prompt information can be a text, for example, using a text to prompt that the relevant information belongs to the main body. The prompt information can also be a graphic, for example, the main body is framed by a dashed frame, or the main body is pointed by a floating arrow.

In this embodiment, the terminal apparatus detects the main body in the currently played video picture, intercepts the image of the main body from the video picture, acquires the relevant information of the main body according to the image of the main body, and displays the video picture and the relevant information of the main body on the same screen. The terminal apparatus can actively recommend the relevant content of the main body in the video to the user, by actively detecting the main body in the video picture, triggering the acquisition of the relevant information of the main body and displaying the relevant information to a user, without any operation by the user, thereby improving the user experience.

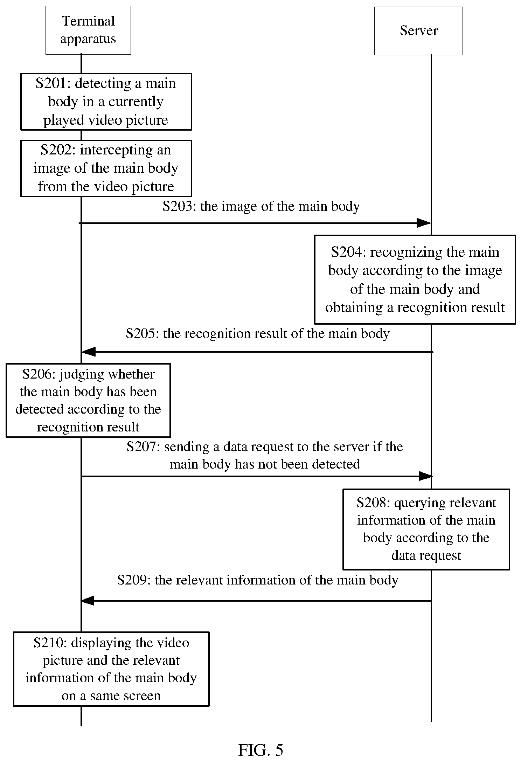

FIG. 5 is a signaling flowchart of the video-based information acquisition method provided in Embodiment II of the present application. Taking an image recognition performed by a server as an example in this embodiment. As shown in FIG. 5, the method provided in this embodiment includes the following steps:
Step S201: a terminal apparatus detects a main body in a currently played video picture.
Step S202: the terminal apparatus intercepts an image of the main body from the video picture.
Step S203: the terminal apparatus sends the image of the main body to the server.
Step S204: the server recognizes the main body according to the image of the main body and obtains a recognition result.
Step S205: the server sends the recognition result of the main body to the terminal apparatus.
Step S206: the terminal apparatus judges whether the main body has been detected according to the recognition result.
   If the main body has not been detected, then step S207 is executed. If the subject has been detected, then the flow is ended.
Step S207: the terminal apparatus sends a data request to the server, where the data request is configured to request relevant information of the main body.
Step S208: the server queries the relevant information of the main body according to the data request.
Step S209: the server sends the relevant information of the main body to the terminal apparatus.
Step S210: the terminal apparatus displays the video picture and the relevant information of the main body on a same screen.

The specific implementation manner of this embodiment, refer to the relevant description of Embodiment I, which will not be repeated here.

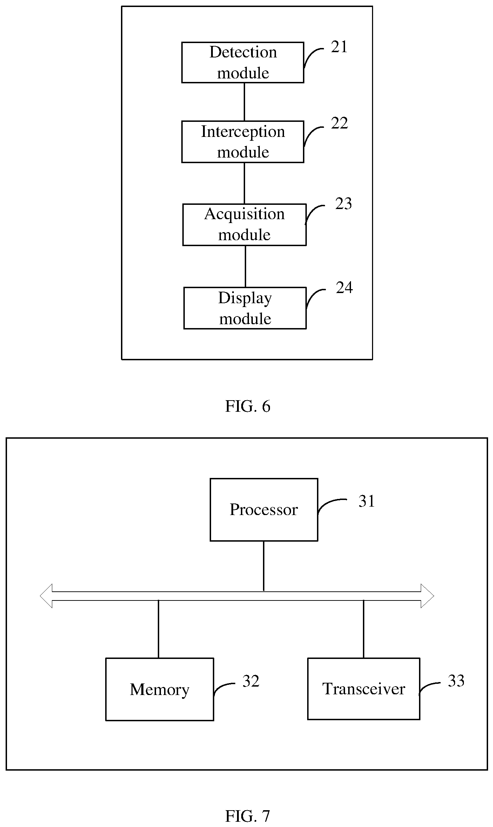

FIG. 6 is a schematic diagram of structure of a video-based information acquisition device provided in Embodiment III of the present application. The device can be integrated in the terminal apparatus. As shown in FIG. 6, the device includes:
a detection module 21, configured to detect a main body in a video picture currently played on a terminal apparatus;
an interception module 22, configured to intercept an image of the main body from the video picture;
an acquisition module 23, configured to acquire relevant information of the main body according to the image of the main body;
a display module 24, configured to display the video picture and the relevant information of the main body on a same screen.

In an exemplary manner, the acquisition module 23 is specifically configured to:
send the image of the main body to a server, so as to enable the server to recognize the main body according to the images of the main body;
receive the relevant information of the main body sent by the server.

In an exemplary manner, before receiving the relevant information of the main body sent by the server, the acquisition module 23 is further configured to:
receive a recognition result of the main body sent by the server;
judge whether the main body has been detected according to the recognition result;
if the main body has not been detected, then send a data request to the server, where the data request is configured to request the relevant information of the main body.

In another exemplary manner, the acquisition module 23 is specifically configured to:
recognize the main body according to the image of the main body to obtain a recognition result;
judge whether the main body has been detected according to the recognition result;
if the main body has not been detected, then send a data request to a server, where the data request is configured to request the relevant information of the main body;
receive the relevant information of the main body sent by the server.

In an exemplary manner, the display module 24 is further configured to: display prompt information on a screen, where the prompt information is configured to prompt that the relevant information on a screen is the relevant information of the main body.

In an exemplary manner, the display module 24 is specifically configured to:
overlapped-display a relevant content of the main body on a preset position of the video content, where a display window of the relevant content of the main body is less than half of a display window of the video.

In another exemplary manner, the display module 24 is specifically configured to:
display a content of the main body in a preset area outside a display window of the video.

In an exemplary manner, the detection module 21 is specifically configured to:
detect a contour of a detection object in the video picture;
determine the main body according to a contour of the detection object in the video picture.

The device provided in this embodiment can be configured to execute the methods executed by the terminal apparatus in Embodiment I and Embodiment II, and the specific implementation manner and technical effect are similar and will not be repeated here.

FIG. 7 is a schematic diagram of structure of the terminal apparatus provided by Embodiment IV of the application. As shown in FIG. 7, the terminal apparatus provided in this embodiment includes a processor 31, a memory 32 and a transceiver 33. The memory 32 is configured to store instructions, and the transceiver 33 is configured to communicate with other devices, and the processor 31 is configured to execute the instructions stored in the memory 32, so as to cause the terminal apparatus to execute the method described in Embodiment I or Embodiment II, which will not be repeated in detail here.

Wherein, the processor 31 can be a microcontroller unit (Microcontroller Unit, MCU), which is also called a single chip microcomputer (Single Chip Microcomputer) or a single chip microcomputer; and the processor 31 can also be a central process unit (Central Process Unit, CPU), a digital signal processor (digital signal processor, DSP), an application specific integrated circuit (application specific integrated circuit, ASIC), a field programmable gate array (field programmable gate array, FPGA) or other programmable logic components, discrete gates or transistor logic components.

The memory 32 may be a random access memory (RAM), a flash memory, a read-only memory (ROM), a programmable read-only memory or an electrically erasable programmable memory, a register and other already-known storage mediums in the field.

Embodiment V of the application provides a computer-readable storage medium. The computer-readable storage medium stores instructions which, when being executed, cause a computer executes the method executed by the terminal apparatus in Embodiment I or Embodiment II.

## Claims

1. A video-based information acquisition method, wherein the method comprises:
detecting, by a terminal apparatus, a main body in a currently played video picture;
intercepting, by the terminal apparatus, an image of the main body from the video picture;
acquiring, by the terminal apparatus, relevant information of the main body according to the image of the main body;
displaying, by the terminal apparatus, the video picture and the relevant information of the main body on a same screen.

2. The method according to claim 1, wherein the acquiring, by the terminal apparatus, relevant information of the main body according to the image of the main body comprises:
sending, by the terminal apparatus, the image of the main body to a server, so as to enable the server to recognize the main body according to the image of the main body;
receiving, by the terminal apparatus, the relevant information of the main body sent by the server.

3. The method according to claim 2, wherein before the receiving, by the terminal apparatus, the relevant information of the main body sent by the server, the method further comprises:
receiving, by the terminal apparatus, a recognition result of the main body sent by the server;
judging, by the terminal apparatus, whether the main body has been detected according to the recognition result;
if the main body has not been detected, sending, by the terminal apparatus, a data request to the server, wherein the data request is configured to request the relevant information of the main body.

4. The method according to claim 1, wherein the acquiring, by the terminal apparatus, relevant information of the main body according to the image of the main body comprises:
recognizing, by the terminal apparatus, the main body according to the image of main body to obtain a recognition result;
judging, by the terminal apparatus, whether the main body has been detected according to the recognition result;
if the main body has not been detected, sending, by the terminal apparatus, a data request to the server, wherein the data request is configured to request the relevant information of the main body;
receiving, by the terminal apparatus, the relevant information of the main body sent by the server.

5. The method according to any one of claims 1 to 4, wherein the method further comprises:
displaying, by the terminal apparatus, prompt information on a screen, wherein the prompt information is configured to prompt that relevant information on the screen is the relevant information of the main body.

6. The method according to any one of claims 1 to 5, wherein the displaying, by the terminal apparatus, the video picture and the relevant information of the main body on a same screen comprises:
overlapped-displaying, by the terminal apparatus, a relevant content of the main body on a preset position of the video content, and a display window of the relevant content of the main body is less than half of a display window of the video.

7. The method according to any one of claims 1 to 5, wherein the displaying, by the terminal apparatus, the video picture and the relevant information of the main body on a same screen comprises:
displaying, by the terminal apparatus, a content of the main body in a preset area outside a display window of the video.

8. The method according to any one of claims 1 to 7, wherein, the detecting, by a terminal apparatus, a main body in a played video picture, comprises:
detecting, by the terminal apparatus, a contour of a detection object in the video picture;
determining, by the terminal apparatus, the main body according to the contour of the detection object in the video picture.

9. The method according to any one of claims 1 to 8, wherein before the detecting, by the terminal apparatus, a main body in currently played video picture, the method further comprises:
displaying, by the terminal apparatus, a recommendation function button on a user interface;
receiving, by the terminal apparatus, a first operation of the recommendation function button by a user; and
starting, by the terminal apparatus, a recommendation function according to the first operation; and
wherein the detecting, by the terminal apparatus, a main body in a currently played video picture comprises:
detecting, by the terminal apparatus, the main body in the currently played video picture when the recommendation function started.

10. The method according to claim 9, wherein after the displaying, by the terminal apparatus, the video picture and the relevant information of the main body on a same screen the method further comprises:
receiving, by the terminal apparatus, a second operation of the recommendation function button by a user;
closing, by the terminal apparatus, a recommendation function according to the second operation.

11. The method according to any one of claims 1 to 9, wherein the detecting, by the terminal apparatus, the main body in a currently played video picture comprises:
detecting, by the terminal apparatus, substances in the video picture according to a preset priority order of detection objects from high to low;
determining the main body from the detected detection object, when the detection object corresponding to a current priority is detected from the substances in the video picture according to the detection object corresponding to the current priority.

12. A terminal apparatus, comprising a processor, a memory and a transceiver, wherein the memory is configured to store instructions, the transceiver is configured to communicate with other apparatuses; and the processor is configured to execute instructions stored in the memory, so as to cause the terminal apparatus to execute the method according to any one of claims 1 to 11.

13. A computer-readable storage medium, wherein the computer-readable storage medium stores instructions which, when being executed, cause a computer to execute the method according to any one of claims 1 to 11.

14. A computer program, comprising program codes, wherein the program codes execute the method according to claims 1 to 11 when the computer program is running by a computer.
